(19) Europäisches Patentamt
European Patent Office
Office européen des brevets

(11) **EP 1 733 157 B1**

(12) **FASCICULE DE BREVET EUROPEEN**

(45) Date de publication et mention
de la délivrance du brevet:
**22.02.2012 Bulletin 2012/08**

(21) Numéro de dépôt: **05739472.8**

(22) Date de dépôt: **25.03.2005**

(51) Int Cl.:
*F16H 61/02* *(2006.01)*      *F16H 61/21* *(2006.01)*

(86) Numéro de dépôt international:
**PCT/FR2005/050195**

(87) Numéro de publication internationale:
**WO 2005/100827 (27.10.2005 Gazette 2005/43)**

(54) **PROCEDE DE CONTROLE DE LA RETROGRADATION DES TRANSMISSIONS AUTOMATIQUES OU AUTOMATISEES UTILISE A DES FINS D'ASSISTANCE AU FREINAGE**

FÜR SERVOBREMSUNG VERWENDETES VERFAHREN ZUR STEUERUNG VON AUTOMATISCHEM ODER AUTOMATISIERTEM GETRIEBEHERUNTERSCHALTEN

METHOD FOR CONTROLLING AUTOMATIC OR AUTOMATED TRANSMISSION DOWNSHIFT USED FOR POWER BRAKING

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.04.2004 FR 0450699**

(43) Date de publication de la demande:
**20.12.2006 Bulletin 2006/51**

(73) Titulaire: **Peugeot Citroën Automobiles**
**78140 Vélizy-Villacoublay (FR)**

(72) Inventeur: **FRANCES, Emmanuel**
**F-78370 Plaisir (FR)**

(74) Mandataire: **Couillard, Yann Luc Raymond**
**Peogeot Citroen Automobiles**
**DINQ/DRIA/PPIQ/VPI/BLE**
**Case Courier LG081**
**18 Rue des Fauvelles**
**92250 La Garenne Colombes (FR)**

(56) Documents cités:
**EP-A- 0 991 880      FR-A- 2 655 121**
**US-A- 4 829 435      US-A- 5 016 495**
**US-A- 5 527 235**

**Description**

La présente invention a pour objet un procédé de contrôle des étapes de rétrogradation des rapports de vitesses dans les transmissions automatiques ou automatisées, permettant d'améliorer l'agrément de conduite et la sécurité du véhicule.

Dans la plupart des procédés de gestion des changements de rapports de vitesses en mode automatique, aussi bien pour les transmissions automatiques que pour les transmissions automatisées, les changements de rapports de vitesses sont décidés par un calculateur en fonction de la vitesse du véhicule et de la charge du moteur. Le plus souvent, ces critères sont traduits sous forme de lois de changement de rapport de vitesses, qui sont représentées sous la forme de courbes construites dans un plan admettant la vitesse du véhicule aux roues $V_{veh}$ en abscisse et le taux d'enfoncement E de la pédale de l'accélérateur en ordonnée.

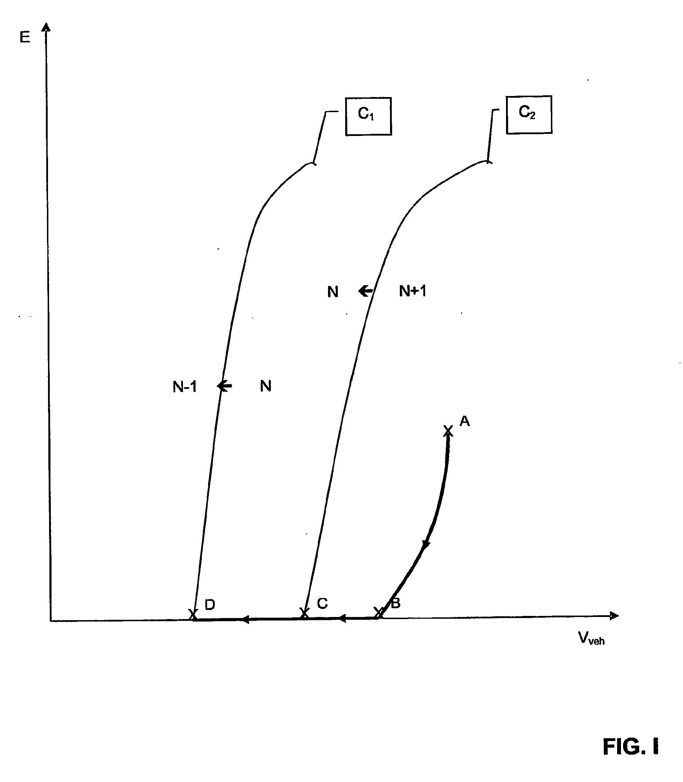

Le principe général des lois de changement de rapports est proposé en Figure 1, dans laquelle les courbes $C_1$ et $C_2$ représentent respectivement les lois de changement de rapport de vitesses par rétrogradation de N vers N-1 et de N+1 vers N.

Suivant ce principe, il apparaît qu'un seul changement à la fois de rapport de vitesses par rétrogradation est possible. En effet, pour passer d'un rapport de vitesses N+1 à un rapport de vitesses N-1, il faut que le véhicule effectue une certaine décélération pour que le calculateur décide le passage du rapport N+1 au rapport N, puis le passage du rapport N au rapport N-1. Par exemple, dans le cas où le conducteur décide de ralentir le véhicule en relâchant la pédale de l'accélérateur puis en freinant, on remarque que l'on part d'un point A pour atteindre un point B qui correspond au fait que le conducteur a relâché la pédale de l'accélérateur, puis lorsque la vitesse du véhicule aux roues $V_{veh}$ coupe la courbe $C_2$ au point C, le calculateur décide le passage du rapport N+1 au rapport N et enfin, lorsque la vitesse du véhicule aux roues $V_{veh}$ coupe la courbe $C_1$ au point D, le calculateur décide le passage du rapport N au rapport N-1. Il s'écoule au final quelques secondes pour passer du rapport N+1 au rapport N-1.

Il apparaît aussi que la rétrogradation suivant le principe général des lois de changement de rapport de vitesses ne tient pas compte de paramètres autres que la vitesse du véhicule et la charge du véhicule, tels que l'intensité du freinage, le temps de freinage ou le type de conduite du conducteur.

En résumé, le principe général des lois de changement de rapports tel que détaillé ci-avant ne permet pas d'anticiper les changements descendants de rapport de vitesses qui génèrent du frein moteur, dans le cas où le conducteur souhaite ralentir le véhicule ou obtenir de la reprise.

Afin de pallier cet inconvénient, des systèmes récents de pilotage de boîtes automatiques, basés sur le calcul en temps réel du régime du moteur en dessous duquel un changement de rapport descendant de vitesse est décidé, ont été développés. C'est le cas par exemple du brevet E0991880 B1 qui revendique un procédé de contrôle de la rétrogradation permettant entre autres d'anticiper les changements descendants de rapport de vitesses en fonction de la charge du véhicule, de la durée du freinage, de l'intensité du freinage, du type de conduite du conducteur et de la vitesse du véhicule. Le procédé de contrôle de la rétrogradation décrit dans le brevet EP0991880 B1 consiste, lors du freinage, à déterminer en fonction de l'intensité et de la durée du freinage, de la déclivité de la route et du type de conduite du véhicule, la valeur seuil du régime de l'arbre d'entrée de boîte de vitesses, $\Omega_{seuil}$, en deçà de laquelle la loi de passage de vitesses classique n'est plus utilisée et en deçà de laquelle la rétrogradation anticipée d'un rapport de vitesses N à un rapport de vitesses N-1 est imposée.

Toutefois, le procédé de contrôle de rétrogradation de transmission automatique décrit dans le brevet EP0991880 B1 ne permet pas d'anticiper un changement de vitesse de plus d'un rapport descendant. C'est à dire qu'il n'est pas possible de passer directement d'un rapport de vitesses N à un rapport de vitesses N-2, puisque le calculateur doit tout d'abord décider d'enclencher le rapport N-1 avant d'avoir à décider s'il faut enclencher le rapport N-2.

On connaît également du document le plus proche US-A-5 527 235 permettant de passer directement d'un rapport de vitesse N à un rapport de vitesse N-2 mais dans lequel les lois de passage de rétrogradation sont des lois fixes qui ne sont pas calculées coup sur coup et qui sont donc moins précises que des lois calculées coup sur coup.

C'est pourquoi, la présente invention a pour but un procédé de contrôle de la rétrogradation des transmissions automatiques ou automatisées, permettant d'anticiper un changement de vitesse de plus d'un rapport descendant à la fois et d'être plus précis dans les documents de vitesses.

Plus précisément, l'invention a pour objet un procédé de contrôle de la rétrogradation des transmissions automatiques ou automatisées utilisé à des fins d'assistance au freinage et comportant un ensemble de lois de passage de rétrogradation classiques, caractérisé en ce qu'il consiste, en dessous d'un certain seuil $E_{seuil}$ arbitraire d'enfoncement de la pédale de l'accélérateur, à calculer une nouvelle loi de passage de rétrogradation destinée à remplacer la loi de passage rétrogradation classique en cours.

La nouvelle loi de passage de rétrogradation est définie par un décalage $\Delta_{(n)(n-1)}$ de la loi de passage en cours, ledit décalage $\Delta_{(n)(n-1)}$ étant calculé entre le seuil $E_{seuil}$ arbitraire d'enfoncement de la pédale de l'accélérateur et l'enfoncement nul de la pédale de l'accélérateur.

Le calcul du décalage $\Delta_{(n)(n-1)}$ de la loi de passage en cours comporte les étapes suivantes :

- déterminer en logique floue, pour un rapport de vitesses engagé, pour un enfoncement E de la pédale de l'accélérateur nul et à partir de la décélération du véhicule due au freinage, du temps de freinage, de la vitesse du véhicule et de la charge du véhicule, un intervalle I de régimes de l'arbre d'entrée de boîte de vitesses du moteur dans lequel la rétrogradation doit être engagée, ledit intervalle I comportant une borne supérieure $\Omega_{Sport}$ qui correspond à une conduite sportive et une borne inférieure $\Omega_{Eco}$ qui correspond à une conduite économique,
- déterminer par interpolation linéaire en fonction d'un indice de sportivité $I_{sportivité}$ de conduite du conducteur, lui-même déterminé en logique floue, et en fonction des régimes $\Omega_{Eco}$ et $Q_{Sport}$ calculés précédemment, le régime $\Omega_{seuil}$ de l'arbre d'entrée de boîte du moteur en dessous duquel la rétrogradation doit être engagée,
- convertir le régime $\Omega_{seuil}$ de l'arbre d'entrée de boîte du moteur en régime de vitesse du véhicule à la roue $V_{veh(n)(n-1)}$ pour chaque rapport de vitesses N, ledit régime $V_{veh(n)(n-1)}$ correspondant à la position où l'enfoncement E de la pédale de l'accélérateur est nul,
- calculer par interpolation linéaire le décalage $\Delta_{(n)(n-1)}$ entre la position où l'enfoncement E de la pédale de l'accélérateur est nul et la position où l'enfoncement E de la pédale de l'accélérateur est égal au seuil $E_{seuil}$ arbitraire d'enfoncement de la pédale de l'accélérateur,
- Vérifier que le décalage $\Delta_{(n)(n-1)}$ est supérieur ou égal à zéro, sinon conserver le résultat obtenu avec la loi de passage de rétrogradation classique.

L'invention concerne également une transmission automatique mettant en oeuvre le procédé de contrôle de la rétrogradation utilisé à des fins d'assistance au freinage tel que décrit précédemment.

L'invention sera mieux comprise à la lecture de la description suivante rédigée à titre d'exemple non limitatif et aux dessins annexés, dans lesquels :

- la figure 1 représente dans un graphe des lois de passage de vitesses classiques comportant en abscisse la vitesse du véhicule aux roues $V_{veh}$ et en ordonnée l'enfoncement E de la pédale de l'accélérateur,
- la figure 2 représente le principe d'obtention des nouvelles lois de passage de vitesses suivant le procédé de contrôle de la rétrogradation utilisé à des fins d'assistance au freinage décrit dans notre invention,
- la figure 3 comporte un exemple de détermination en logique floue du régime cible d'arbre d'entrée de boîte de vitesses correspondant à une conduite économique Fuz $\Omega_{Eco}$ pour une charge du véhicule Q égale à zéro et pour une vitesse du véhicule $V_{veh}$ faible,
- la figure 4 représente dans un graphe les nouvelles lois de passage de vitesses suivant le procédé de contrôle de la rétrogradation utilisé à des fins d'assistance au freinage décrit dans notre invention.

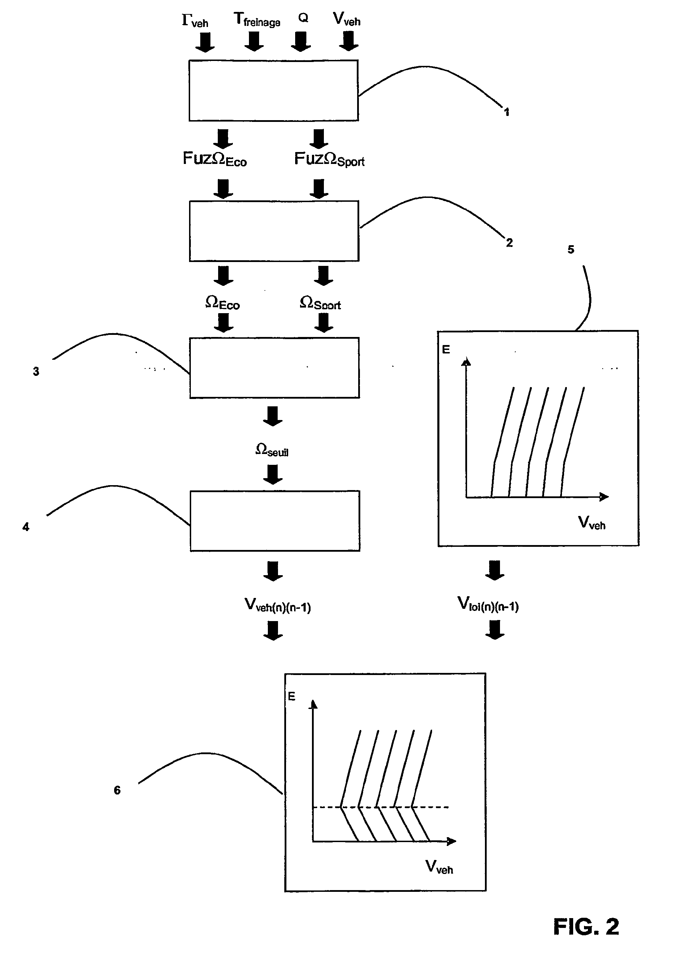

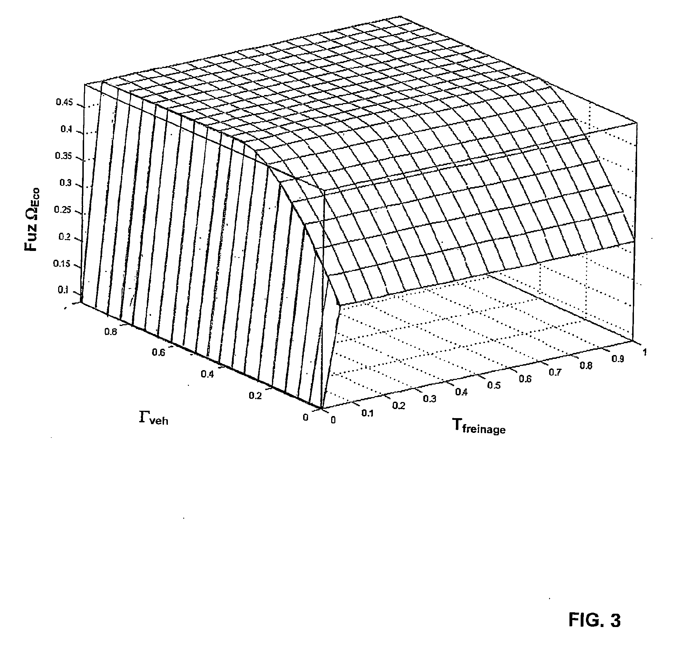

On se réfère aux figures 2 et 3 pour expliquer plus en détail le procédé de contrôle de la rétrogradation utilisé à des fins d'assistance au freinage, selon l'invention. Lors de la phase de freinage, une première unité de calcul, appelée bloc 1 va recevoir les informations suivantes :

- $V_{veh}$, qui correspond à la mesure de la vitesse du véhicule aux roues,
- $\Gamma_{veh}$, qui représente la décélération du véhicule obtenue soit par dérivation et filtrage de la vitesse du véhicule $V_{veh}$ soit par une mesure physique,
- $T_{freinage}$, qui représente le temps de freinage, qui s'incrémente à partir de la valeur zéro dès que le contact de frein s'active,
- Q, qui représente la charge du véhicule, déterminée classiquement par la formule suivante :

$$Q = F_{mot} - F_{résistant} - M . \Gamma_{veh}, \text{ avec :}$$

■ $F_{mot}$ est la force motrice aux roues
■ $F_{résistant}$ est l'ensemble des forces de résistance à l'avancement liées par exemple à l'aérodynamique du véhicule ou bien à l'adhérence de la route.
■ M est la masse du véhicule à vide

On voit que Q est successivement nulle sur une route plane avec un véhicule non chargé, positive sur une route montante ou avec un véhicule chargé, négative sur une route descendante.

A partir des informations $\Gamma_{veh}$, $V_{veh}$, $T_{freinage}$ et Q et de manière analogue au procédé décrit dans le brevet EP0991880 B1, le bloc 1 calcule en logique floue le régime cible d'arbre d'entrée de boîte de vitesses correspondant à une conduite économique Fuz$\Omega_{Eco}$ et le régime cible d'arbre d'entrée de boîte de vitesses correspondant à une conduite sportive Fuz$\Omega_{Sport}$. Le régime cible d'arbre d'entrée de boîte est le régime limite en sortie d'embrayage pour une boîte de vitesses robotisée, appelée également transmission automatisée, ou en sortie de convertisseur pour une transmission automatique, en dessous duquel une rétrogradation est anticipée.

A titre indicatif et nullement limitatif, les calculs en logique floue utilisés pour déterminer le régime cible d'arbre d'entrée de boîte de vitesses correspondant à une conduite économique $Fuz\Omega_{Eco}$ sont effectués pour un enfoncement nul de la pédale de l'accélérateur puisqu'on est en situation de freinage et sont illustrés par un exemple dans la figure 3. Cette figure représente un graphe en trois dimensions permettant de déterminer, en fonction de la décélération $\Gamma_{veh}$ et du temps de freinage $T_{freinage}$, le régime cible d'arbre d'entrée de boîte correspondant à une conduite économique $Fuz\Omega_{Eco}$. Le graphe correspond aussi à une situation où la charge du véhicule Q est nulle et où la vitesse $V_{veh}$ est faible. Les valeurs $\Gamma_{veh}$, $T_{freinage}$ et $Fuz\Omega_{Eco}$ sont données en degré d'appartenance compris entre 0 et 1. Ainsi pour une valeur de décélération $\Gamma_{veh}$ qui vaut 0,2 (soit 101,6 t/min/s) et un temps de freinage $T_{freinage}$ qui vaut 0,1 (soit 2,55 s), le régime cible d'arbre d'entrée de boîte correspondant à une conduite économique $Fuz\Omega_{Eco}$ vaut 0,25 (soit 2040 tr/min).

Puis, le bloc 2 applique un gain aux régimes cibles précédemment calculés en fonction du rapport de vitesses N précédemment engagé. Ce gain permet d'obtenir le même régime cible après rétrogradation pour un régime cible avant rétrogradation équivalent bien que l'étagement des démultiplications ne soit pas constant d'un rapport initial à l'autre.

Ainsi, on a déterminé pour un rapport de vitesses N engagé et à partir de la décélération du véhicule due au freinage $\Gamma_{veh}$, du temps de freinage $T_{freinage}$, de la vitesse du véhicule $V_{veh}$ et de la charge du véhicule Q, un intervalle I de régimes de l'arbre d'entrée de boîte du moteur dans lequel la rétrogradation doit être engagée, ledit intervalle I comportant une borne supérieure $\Omega_{Sport}$ qui correspond à une conduite sportive et une borne inférieure $\Omega_{Eco}$ qui correspond à une conduite économique.

A partir des deux bornes de l'intervalle I, le bloc 3 détermine par interpolation linéaire et en fonction d'un indice de sportivité du conducteur $I_{sportivité}$ déterminé en logique floue, le régime cible moyen de l'arbre d'entrée de boîte :

$$\Omega_{seuil} = \Omega_{Eco} + (\Omega_{Sport} - \Omega_{Eco}) \cdot I_{sportivité}$$

Le bloc 4 convertit ensuite le régime cible moyen de l'arbre d'entrée de boîte $\Omega_{seuil}$ en régime cible moyen de la vitesse du véhicule aux roues pour chaque rapport de vitesses N en fonction du rapport de boîte de vitesses $R'_n$ et du rapport de pont $R''_n$ suivant la formule :

$$V_{veh(n)(n-1)} = \Omega_{seuil} \cdot R'_n \cdot R''_n$$

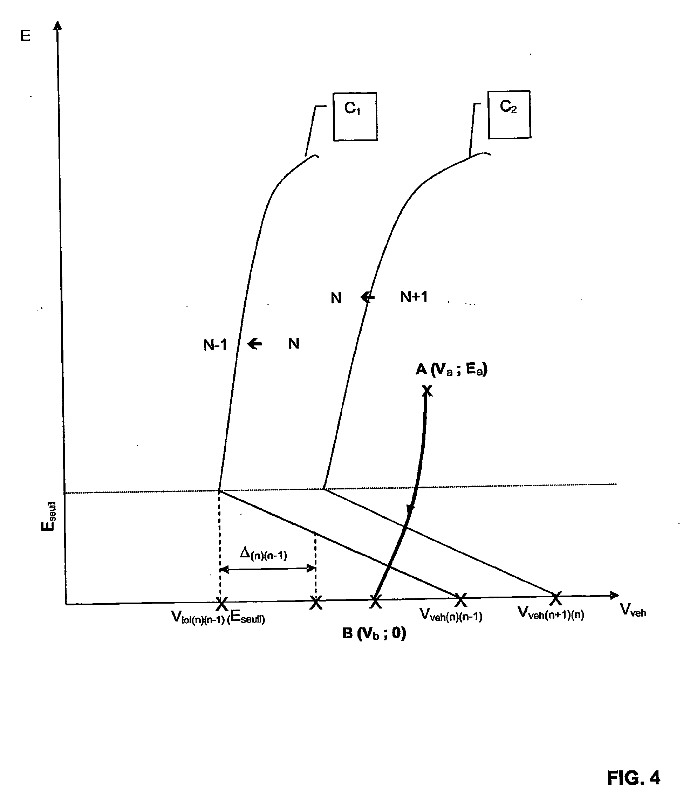

On voit alors en se référant à la figure 4, que le régime cible moyen de la vitesse du véhicule aux roues $V_{veh(n)(n-1)}$ correspond à la position où l'enfoncement E de la pédale de l'accélérateur est nul et où un changement de rapport de vitesses de N vers N-1 doit être enclenché,

Enfin, en se basant sur des lois de passage élaborées par des cartographies classiques dans le bloc 5, le bloc 6 recalcule les lois de passage par interpolation linéaire entre la position où l'enfoncement E de la pédale de l'accélérateur est nul et où le régime cible moyen de la vitesse du véhicule aux roues vaut $V_{veh(n)(n-1)}$ et la position où l'enfoncement E de la pédale de l'accélérateur est égal à un seuil arbitrairement choisi $E_{seuil}$ et où le régime cible moyen de la vitesse du véhicule aux roues correspondant est déterminé selon les cartographies classiques dans le bloc 5, soit $V_{loi(n)(n-1)}$ ($E_{seuil}$. La loi de passage, entre les deux positions de la pédale de l'accélérateur définies précédemment, admet par conséquent un décalage $\Delta_{(n)(n-1)}$ qui vaut $V_{veh(n)(n-1)}$-$V_{loi(n)(n-1)}$($E_{seuil}$) quand l'enfoncement E de la pédale de l'accélérateur est nul et si $V_{veh(n)(n-1)}$ - $V_{loi(n)(n-1)}$ ($E_{seuil}$) est supérieur ou égal à 0 et qui vaut 0 quand l'enfoncement E de la pédale de l'accélérateur est égal à $E_{seuil}$.

La loi de passage, établie par interpolation linéaire entre les deux positions de la pédale de l'accélérateur définies précédemment peut s'exprimer comme suit :

$$\Delta_{(n)(n-1)} = (V_{veh(n)(n-1)} - V_{loi(n)(n-1)} (E_{seuil})) \cdot (E_{seuil} - E) / E_{seuil})$$

En se référant à la figure 4, il apparaît que, dans une situation classique de freinage où le conducteur relâche tout d'abord la pédale de l'accélérateur avant de commencer à freiner, on part d'un point A qui correspond à un rapport de vitesses N+1 enclenché et qui correspond à une certaine vitesse $V_a$ et à un certain enfoncement de la pédale l'accélérateur $E_a$, pour aller vers un point B qui correspond à une vitesse inférieure $V_b$ et à un enfoncement de la pédale l'accélérateur qui est nul. Lorsque le conducteur commence à freiner, le procédé de contrôle de la rétrogradation relatif à notre invention calcule les décalages $\Delta_{(n+1)(n)}$ et $\Delta_{(n)(n-1)}$ pour chacune des lois de passage N+1/N et N/N-1 correspondant respectivement à la courbe $C_2$ et à la courbe $C_1$. Or $V_b$ étant inférieur à $V_{veh(n)(n-1)}$, le procédé de contrôle de la rétrogradation en déduit qu'il faut enclencher le rapport N-1. Ainsi, on passe, directement et de manière anticipée, d'un rapport de vitesses N+1 à un rapport de vitesses N-1.

## Revendications

**1.** Procédé de contrôle de la rétrogradation des transmissions automatiques ou automatisées utilisé à des fins d'assistance au freinage et comportant un ensemble de lois de passage de rétrogradation classiques, **caractérisé en ce qu'**il consiste, en dessous d'un certain seuil ($E_{seuil}$) arbitraire d'enfoncement de la pédale de l'accélérateur, à calculer une nouvelle loi de passage de rétrogradation destinée à remplacer la loi de passage de rétrogradation classique en cours et définie par un décalage ($\Delta_{(n)(n-1)}$) de la loi de passage en cours, ledit décalage ($\Delta_{(n)(n-1)}$) étant calculé entre le seuil ($E_{seuil}$) arbitraire d'enfoncement de la pédale de l'accélérateur et l'enfoncement nul de la pédale de l'accélérateur.

**2.** Procédé de contrôle, selon la revendication 1, **caractérisé en ce que** le calcul du décalage ($\Delta_{(n)(n-1)}$) de la loi de passage en cours comporte les étapes suivantes :

a) déterminer en logique floue, pour un rapport de vitesses engagé, pour un enfoncement (E) de la pédale de l'accélérateur nul et à partir de la décélération du véhicule due au freinage ($\Gamma_{veh}$), du temps de freinage ($T_{freinage}$), de la vitesse du véhicule ($V_{veh}$) et de la charge du véhicule (Q), un intervalle (I) de régimes de l'arbre d'entrée de boîte du moteur dans lequel la rétrogradation doit être engagée, ledit intervalle (I) comportant une borne supérieure ($\Omega_{Sport}$) qui correspond à une conduite sportive et une borne inférieure ($\Omega_{Eco}$) qui correspond à une conduite économique,
b) déterminer par interpolation linéaire en fonction d'un indice ($I_{sportivité}$)de sportivité de conduite du conducteur, lui-même déterminé en logique floue, et en fonction des régimes ($\Omega_{Eco}$) et ($\Omega_{sport}$) calculés précédemment, le régime ($\Omega_{seuil}$) de l'arbre d'entrée de boîte du moteur en dessous duquel la rétrogradation doit être engagée,
c) convertir le régime ($\Omega_{seuil}$) de l'arbre d'entrée de boîte de vitesses en régime de vitesse du véhicule à la roue ($V_{vah(n)(n-1)}$) pour chaque rapport de vitesses (N), ledit régime ($V_{veh(n)(n-1)}$) correspondant à la position où l'enfoncement (E) de la pédale de l'accélérateur est nul,
d) calculer par interpolation linéaire le décalage ($\Delta_{(n)(n-1)}$) entre la position où l'enfoncement (E) de la pédale de l'accélérateur est nul et la position où l'enfoncement (E) de la pédale de l'accélérateur est égal au seuil ($E_{seuil}$) arbitraire d'enfoncement de la pédale de l'accélérateur,
e) Vérifier que le décalage ($\Delta_{(n)(n-1)}$) est supérieur ou égal à 0, sinon conserver le résultat obtenu avec la loi de passage de rétrogradation classique.

**3.** Transmission automatique ou automatisée de véhicule automobile, **caractérisée en ce qu'**elle comprend un procédé de contrôle de la rétrogradation des transmissions automatiques ou automatisées utilisé à des fins d'assistance au freinage selon l'une des revendications précédentes.

## Claims

**1.** Method for controlling the downshifting of automatic or automated transmissions, which is used to assist braking and comprises a set of standard laws for downshift gear changes, **characterised in that** it consists in calculating, below a certain arbitrary threshold ($E_{threshold}$) of depression of the accelerator pedal, a new downshift gear change law intended to replace the current standard downshift gear change law and defined by a shift ($\Delta_{(n)(n-1)}$) of the current downshift gear change law, said shift ($\Delta_{(n)(n-1)}$) being calculated between the arbitrary threshold ($E_{threshold}$) of depression of the accelerator pedal and the zero depression of the accelerator pedal.

**2.** Control method according to claim 1, **characterised in that** the calculation of the shift ($\Delta_{(n)(n-1)}$) of the current downshift gear change law comprises the following steps:

a) determining by fuzzy logic, for an engaged speed ratio, for a depression (E) of the accelerator pedal equal to zero and starting from the deceleration of the vehicle due to braking ($\Gamma_{veh}$), the braking time ($T_{braking}$), the speed of the vehicle ($V_{veh}$) and the load of the vehicle (Q), a range (I) of speeds of the gearbox input shaft of the engine in which the downshift must be initiated, said range (I) comprising an upper limit ($\Omega_{Sport}$) which corresponds to a sportive driving style and a lower limit ($\Omega_{Eco}$) which corresponds to an economical driving style,
b) determining by linear interpolation, as a function of a sportivity index ($I_{sportivity}$) of the driving style of the driver, itself determined by fuzzy logic, and as a function of the speeds ($\Omega_{Eco}$) and ($\Omega_{Sport}$) calculated previously, the speed ($\Omega_{threshold}$) of the gearbox input shaft of the engine below which the downshift must be initiated,
c) converting the speed ($\Omega_{threshold}$) of the gearbox input shaft into a speed of the vehicle at the wheel ($V_{veh(n)(n-1)}$) for each speed ratio (N), said speed ($V_{veh(n)(n-1)}$) corresponding to the position in which the depression (E) of the accelerator pedal is zero,
d) calculating by linear interpolation the shift ($\Delta_{(n)(n-1)}$) between the position in which the depression (E) of the accelerator pedal is zero and the position in which the depression (E) of the accelerator pedal is equal to the arbitrary threshold ($E_{threshold}$) of depression of the accelerator pedal,
e) checking that the shift ($\Delta_{(n)(n-1)}$) is greater than or equal to zero, otherwise keeping the result obtained using the standard downshift gear change law.

3. Automatic or automated transmission of a motor vehicle, **characterised in that** it comprises a method according to one of the preceding claims for controlling the downshifting of automatic or automated transmissions, said method being used for power braking purposes.

**Patentansprüche**

1. Verfahren zur Steuerung der Rückschaltung von Automatikgetrieben oder automatisierten Getrieben, das zum Zwecke der Bremskraftverstärkung verwendet wird und eine Anordnung von herkömmlichen Rückschaltkennlinien aufweist, **dadurch gekennzeichnet, dass** es darin besteht, unterhalb eines bestimmten willkürlichen Schwellwerts ($E_{Schwellwert}$) für den Durchtritt des Fahrpedals eine neue Rückschaltkennlinie zu berechnen, die dafür vorgesehen ist, die laufende herkömmliche Rückschaltkennlinie zu ersetzen, und durch einen Versatz ($\Delta_{(n)(n-1)}$) der laufenden Schaltkennlinie festgelegt ist, wobei der Versatz ($\Delta_{(n)(n-1)}$) zwischen dem willkürlichen Schwellwert ($E_{Schwellwert}$) für den Durchtritt des Fahrpedals und dem Nulldurchtritt des Fahrpedals berechnet wird.

2. Verfahren zur Steuerung nach Anspruch 1, **dadurch gekennzeichnet, dass** die Berechnung des Versatzes ($\Delta_{(n)(n-1)}$) der laufenden Schaltkennlinie folgende Schritte aufweist:

a) Bestimmung durch Fuzzylogik für eine eingelegte Gangstufe, für einen Nulldurchtritt (E) des Fahrpedals und ausgehend von der Verzögerung des Fahrzeugs aufgrund der Bremsung ($\Gamma_{Fahrzeug}$), der Bremszeit ($T_{Bremsung}$), der Geschwindigkeit des Fahrzeugs ($V_{Fahrzeug}$) und der Beladung des Fahrzeugs (Q) eines Intervalls (I) von Drehzahlen der Getriebeeingangswelle des Motors, in dem die Rückschaltung erfolgen soll, wobei das Intervall (I) eine obere Schranke (sport) aufweist, die einer sportlichen Fahrweise entspricht, und eine untere Schranke ($\Omega_{Eco}$) aufweist, die einer sparsamen Fahrweise entspricht,
b) Bestimmung durch lineare Interpolation in Abhängigkeit von einem Index ($I_{Sportlichkeit}$) für die Sportlichkeit der Fahrweise des Fahrers, der seinerseits durch Fuzzylogik bestimmt wird, und in Abhängigkeit von den zuvor berechneten Drehzahlen ($\Omega_{Eco}$) und ($\Omega_{Sport}$) der Drehzahl ($O_{Schwellwert}$) der Getriebeeingangswelle des Motors, unterhalb deren die Rückschaltung erfolgen soll,
c) Umwandlung der Drehzahl ($Q_{Schwellwert}$) der Getriebeeingangswelle in eine Drehzahl des Fahrzeugs am Rad ($V_{Fahrzeug(n)(n-1)}$) für jede Gangstufe (N), wobei die Drehzahl ($V_{Fahrzeug(n)(n-1)}$) der Position entspricht, in welcher der Durchtritt (E) des Fahrpedals gleich Null ist,
d) Berechnung durch lineare Interpolation des Versatzes ($\Delta_{(n)(n-1)}$) zwischen der Position, in welcher der Durchtritt (E) des Fahrpedals gleich Null ist, und der Position, in welcher der Durchtritt (E) des Fahrpedals gleich dem willkürlichen Schwellwert ($E_{Schwellwert}$) für den Durchtritt des Fahrpedals ist,
e) Überprüfung, ob der Versatz ($\Delta_{(n)(n-1)}$) größer oder gleich 0 ist, andernfalls Beibehaltung des mit der herkömmlichen Rückschaltkennlinie erhaltenen Ergebnisses.

3. Automatikgetriebe oder automatisiertes Getriebe für ein Kraftfahrzeug, **dadurch gekennzeichnet, dass** es ein Verfahren zur Steuerung der Rückschaltung von Automatikgetrieben oder automatisierten Getrieben nach einem der vorhergehenden Ansprüche umfasst, das zum Zwecke der Bremskraftverstärkung verwendet wird.

FIG. I

$\Gamma_{veh}$   $T_{freinage}$   Q   $V_{veh}$

$Fuz\Omega_{Eco}$   $Fuz\Omega_{Sport}$

$\Omega_{Eco}$   $\Omega_{Sport}$

1

2   5

E

$V_{veh}$

3

$\Omega_{seuil}$

4

$V_{veh(n)(n-1)}$   $V_{loi(n)(n-1)}$

E

$V_{veh}$

6

E

$V_{veh}$

FIG. 2

8

FIG. 3

**FIG. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0991880 B1

- US 5527235 A